# DEMANDE DE BREVET EUROPEEN

(11) **EP 1 371 288 A1**
(43) Date de publication de la demande: **17.12.2003**
(21) Numéro de dépôt: 03356090.5
(22) Date de dépôt: 12.06.2003
(51) Int. Cl.: A01M 29/00, E04D 13/00

(54) **Dispositif anti volatile**

(30) Priorité: 12.06.2002 FR 0207449
(71) Demandeur: Batiservices, 69003 Lyon (FR)
(72) Inventeur: Billebaud, Gérald, 69330 Jons (FR)
(74) Mandataire: Maureau, Philippe

(57) **Abrégé**

Ce dispositif anti volatile est composé d'une embase (2) allongée en matière plastique, apte à reposer sur un support, et des tiges métalliques (3) saillant vers le haut, caractérisé en ce que au moins l'une des tiges (3) est parcourue par un courant électrique.

## Description

L'invention est relative à un dispositif anti volatile.

Pour empêcher les volatiles de se poser sur les bâtiments et supprimer ainsi toute salissure par leurs déjections, il est connu de fixer sur les surfaces à protéger des dispositifs comprenant, comme décrit dans le document US 3 282 00, une embase de laquelle font saillies des pics constitués par des tiges métalliques, ces tiges étant unitaires et rectilignes, ou doubles et formées par les ailes d'une fourche en V ou U obtenue par pliage d'un fil métallique.

Pour réduire l'impact que de tels dispositifs ont sur l'aspect esthétique des bâtiments protégés, le document FR-A-2 556 932 propose d'utiliser une embase en matière plastique sur la face supérieure de laquelle sont fixées des fourches en fil métallique plié, tandis que, conformément au document EP 340 108, les pics sont constitués par des fils métalliques unitaires engagés dans des canaux de l'embase en matière plastique et fixés par collage de leur extrémité, droite ou coudée, dans le canal ou dans un logement de l'embase débouchant vers le bas.

L'usage ayant montré que la liaison par collage était affectée par les intempéries et permettait aux pics de se désolidariser de l'embase, cette liaison a été remplacée par une liaison par coincement mécanique. Ainsi, dans le document EP-A-598 853, les tiges constituant les deux ailes d'une fourche en U à ailes évasées sont introduites par le dessous dans les canaux de l'embase et immobilisées par coincement d'une déformation de chaque tige dans le canal correspondant.

Dans le document EP-A-792 099, la liaison de chaque fourche en U à ailes évasées dans l'embase est assurée par coincement de chaque tige avec les bords extrêmes opposés du canal qui la reçoit, lesdits bords opposés étant disposés de manière à donner à chaque tige une angulation supérieure à celle qui lui est donnée lors de la fabrication de la fourche en U à ailes évasées.

Ce mode de liaison impose donc l'utilisation de fourches en U à ailes évasées dont les tiges ont une angulation définie. Il en résulte que, lorsque le dispositif est implanté sur un support étroit, par exemple sur une corniche ayant une largeur de 4 à 5 centimètres, les extrémités des tiges disposées près de la paroi, viennent en contact avec cette paroi et sont inefficaces vis-à-vis des volatiles.

Bien qu'efficace pour de gros volatiles tels que des pigeons, un autre inconvénient des dispositifs connus utilisant des pics est que les volatiles de petite taille peuvent s'introduire entre les pics pour aller, par exemple, nidifier dans des lieux pour lesquels ces dispositifs sont censés interdire l'accès. Or, ces petits volatiles, tels que moineaux ou étourneaux, constituent une population importante qui crée de nombreuses nuisances.

Ces dispositifs, par ailleurs, ne sont pas totalement efficaces lorsque des volatiles approchent latéralement par rapport au dispositif, c'est-à-dire selon un plan d'approche dans lequel les pics ne produisent pas d'effet.

Un but de l'invention est donc de proposer un dispositif anti volatile qui permette de repousser des volatiles de toute taille.

Un autre but de l'invention est de fournir un dispositif qui assure une liaison mécanique permettant, avec une même semelle, d'utiliser des fourches en U de formes différentes, adaptées aux conditions d'implantation et à la taille des volatiles devant être repoussés.

Ces buts sont atteints grâce à un dispositif défini par la revendication principale et les revendications qui s'y rattachent.

Le dispositif selon une forme de réalisation est composé, comme ceux connus, d'une embase allongée en matière plastique apte à reposer sur un support et de tiges saillant vers le haut à partir de ladite embase, ces tiges étant constituées par les ailes d'une fourche en fil métallique, lesdites ailes traversant des canaux verticaux de l'embase alors que l'âme les reliant est contenue dans un logement transversal de l'embase, débouchant de la face inférieure de celle-ci et communiquant avec lesdits canaux.

Selon une forme de réalisation de l'invention, chacun des logements transversaux ménagés dans l'embase pour contenir l'âme d'une fourche en U, d'une part, présente une forme oblongue dont chacune des deux extrémités communique avec un canal vertical cylindrique ayant un diamètre égal, au jeu près, au diamètre d'une tige et, d'autre part, comporte, en saillie de ses faces opposées, des godrons ou des nervures verticales aptes à venir en appui de pincement contre l'âme reliant deux tiges, tandis que chacune des tiges est reliée à son âme par un tronçon perpendiculaire à cette âme s'étendant au moins sur une hauteur égale à l'épaisseur de l'embase.

Ainsi, chacune des fourches est fixée mécaniquement à l'embase par pincement de son âme au moyen des nervures saillant dans le logement recevant cette âme et ce mode de liaison, combiné avec la présence de tronçons verticaux saillant de l'âme, divise chaque fourche en deux zones, une zone de fixation, ayant toujours le même profil pour coopérer avec l'embase, et une zone extérieure, dans laquelle les ailes prolongeant le tronçon et formant les tiges de repoussement peuvent prendre n'importe quelle angulation, en fonction des besoins, sans que cela affecte la fixation de la structure sur l'embase.

Dans une forme d'exécution, chacune des fourches est choisie parmi deux modèles se différenciant par l'orientation de la partie libre de l'une des deux tiges qui est soit inclinée à l'inverse de l'autre tige et avec le même angle, soit droite et disposée dans le prolongement de son tronçon perpendiculaire à l'âme.

Dans une autre forme d'exécution, chaque logement de l'embase comporte un canal supplémentaire, vertical et central, et chacune des fourches est choisie parmi plusieurs modèles se différenciant par l'orientation des parties libres des tiges, inclinées ou droites, et par la longueur de l'âme qui peut être courte, pour coopérer avec un canal extrême et avec le canal central, ou longue pour coopérer avec les deux canaux extrêmes.

Grâce à cet aménagement, le dispositif anti volatile peut être mis en place sur tout support, large ou étroit, et peut servir pour repousser des volatiles de tailles différentes, et cela par simple sélection des fourches.

Avantageusement, l'embase comporte en saillie de ses bords longitudinaux des oreilles ajourées coopérant avec un organe d'accrochage sur le bord extérieur d'un chéneau.

L'invention sera mieux comprise à l'aide de la description qui suit en référence au dessin schématique annexé représentant, à titre d'exemple, plusieurs formes d'exécution du dispositif selon l'invention.
**Figure 1** en est une vue en perspective,
**Figure 2** représente un berceau supportant des conducteurs,
**Figure 3** représente en vue de face une forme d'exécution du dispositif,
**Figure 4** en est une vue en perspective lorsqu'il est en place sur un support,
**Figure 5** est une vue en coupe transversale suivant V-V de figure 1,
**Figure 6** est une vue partielle, en plan par-dessous, du logement ménagé dans l'embase pour recevoir une structure en U,
**Figures 7 à 10** sont des vues de côté en élévation montrant quelques formes d'exécution des structures en U pouvant être montées dans l'embase.

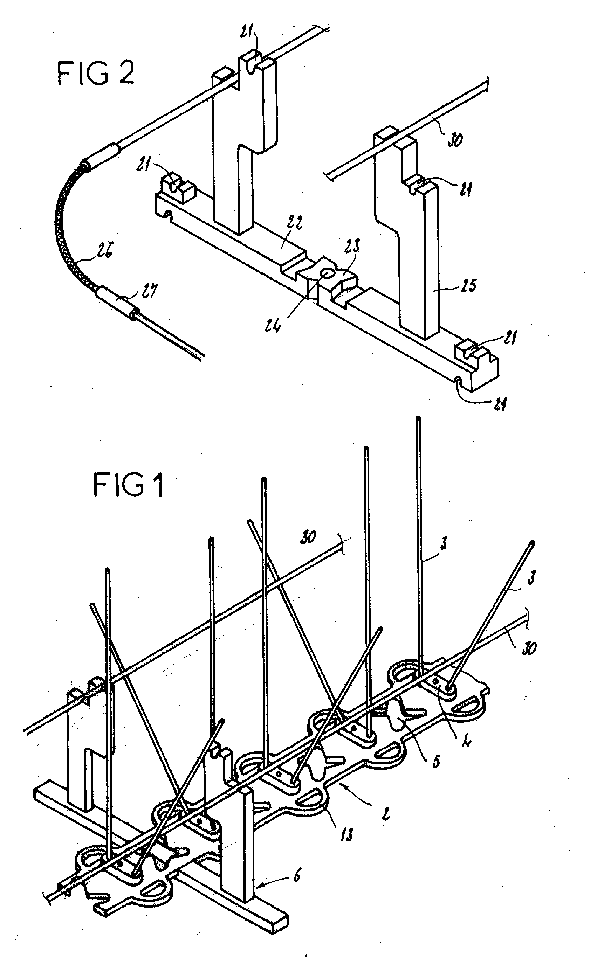

Ce dispositif est constitué par une embase en matière plastique, désignée de façon générale par la référence 2, et par des tiges 3 réunies par paires dans une structure en forme générale de U. Comme montré à la figure 1, l'embase 2 comporte, sur sa longueur, une succession de bossages transversaux 4, espacés longitudinalement avec un pas régulier et servant à la liaison des tiges 3. Entre les bossages 4 sont ménagés des découpes 5 servant à l'allégement de l'embase et facilitant sa fixation par collage sur un support quelconque.

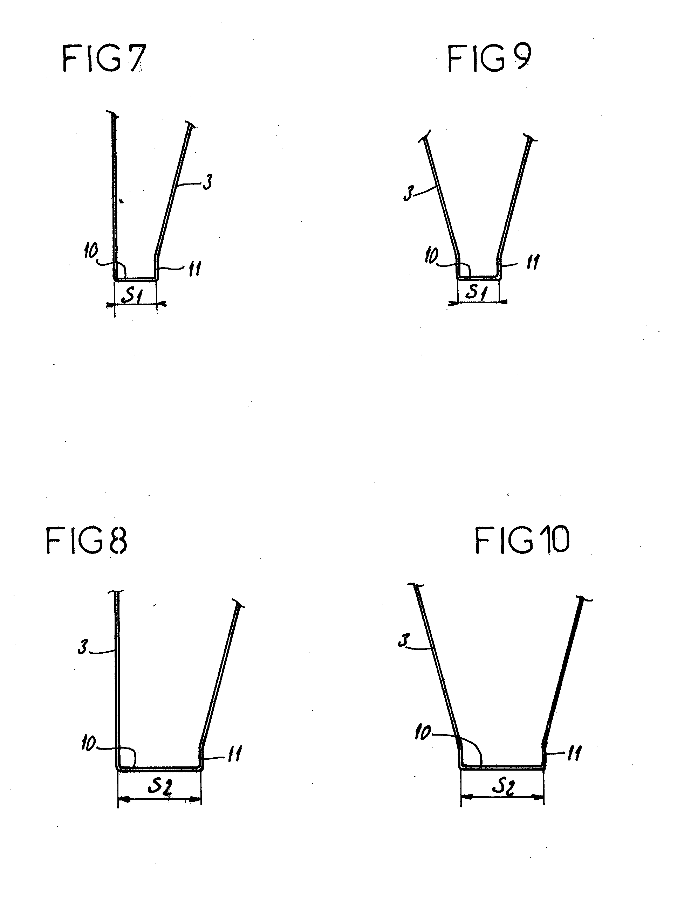

L'embase 2 est mise en oeuvre avec des structures en U qui sont choisies parmi celles représentées aux figures 7 à 10 et qui, chacune, comporte deux tiges 3, reliées par une âme 10.

Les figures 7 à 10 montrent que les âmes 10 avec les tronçons 11 peuvent présenter soit une longueur S1 correspondant à l'intervalle entre un canal extrême 7a ou 7b, et le canal central 9, soit une longueur S2 correspondant à l'intervalle entre deux canaux extrêmes d'un même logement, tandis que les tiges 3 peuvent être inclinées de chaque côté pour former un évasement symétrique, comme montré sur les figures 10 et 11, ou inclinées que d'un seul côté, l'autre côté étant vertical, comme montré sur les figures 8 et 9.

Dans la forme d'exécution représenté à la figure 1, on peut voir que les structures en U sont d'un type asymétrique comme représenté à la figure 9 et sont montées dans l'embase 2 avec leur tige 3 inclinée alternativement dans des directions opposées.

On peut voir également sur la figure 1 qu'un berceau 6 est encliqueté dans l'embase 2. L'engagement du berceau 6 dans l'embase 2 se fait au niveau de la découpe 5 de cette dernière.

Le berceau 6 qui est représenté à la figure 2 est équipé de plusieurs encoches 21 dans lesquelles des conducteurs métalliques 30 peuvent être engagés. Comme on peut le voir sur la figure 2, le berceau 6 présente une traverse 22 munie à chaque extrémité, sur ses faces supérieure et inférieure, d'encoches 21.

Au niveau de sa partie médiane, le berceau présente un bossage 23 pouvant s'encliqueter dans la découpe 5 de l'embase. On note également que le perçage 24 est prévu dans le bossage 23 pour éventuellement passer une vis de fixation.

Depuis la traverse 22, s'élèvent deux montants 25 symétriques par rapport au plan médian du berceau 6. Chaque montant 25 présente deux encoches 21 à des hauteurs différentes.

En revenant à la figure 1, on peut donc voir que deux conducteurs 30 sont en contact avec les tiges 3.

Ces conducteurs 30 qui sont disposés de part et d'autre des structures en U sont en contact des tiges 3.

Comme les structures en U sont asymétriques, chaque conducteur est en contact avec une structure en U sur deux. Ainsi, les deux conducteurs 30 ne sont pas en contact d'une même structure en U éliminent le risque d'un court-circuit.

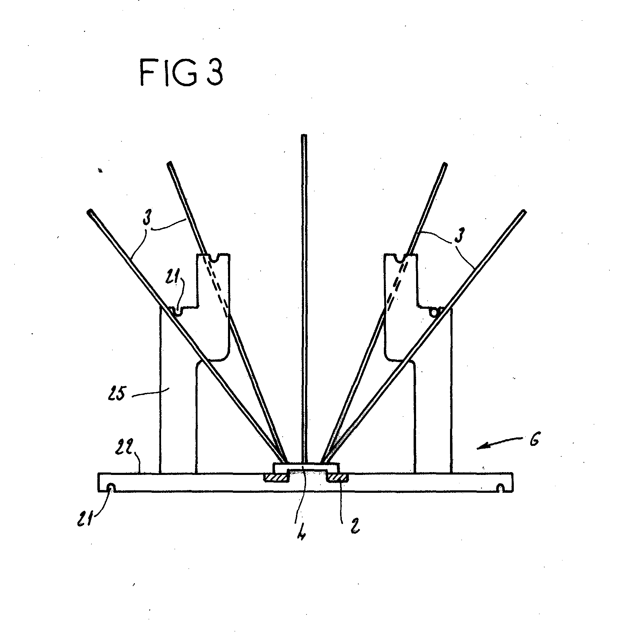

Dans l'exemple représenté sur la figure 3, les structures en U présentent des évasements symétriques différents et sont disposés sur l'embase 2 alternativement avec des évasements plus ou moins prononcés.

Deux conducteurs 30 sont disposés de part et d'autre des structures en U. Comme on le voit sur cette figure, pour ne pas former de court-circuit entre les conducteurs 30, ceux-ci sont disposés sur le berceau à des hauteurs différentes, de sorte que les deux structures en U consécutives sont en contact avec l'un ou l'autre des conducteurs 30.

On peut noter par ailleurs que la connexion de deux conducteurs 30 peut se faire par un élément conducteur souple tel qu'un câble ou une tresse métallique 26 serti à chacune de ses extrémités par un cosse métallique ou dans le cas d'une tresse 26 par un manchon thermorétractable 27.

Ainsi, grâce à l'électrification des tiges 3, les petits volatiles qui, auparavant, pouvaient stationner ou nidifier entre deux tiges reçoivent un choc électrique. Bien sûr ce choc électrique n'est pas dangereux mais est extrêmement désagréable pour le volatile de sorte qu'une fois touché, il ne s'en approche même plus.

En ce qui concerne la fixation de la structure en U, c omme montré plus en détails à la figure 5, chaque bossage 4 est traversé verticalement par deux canaux extrêmes 7a, 7b qui communiquent avec les bords arrondis 8a, 8b d'un logement oblong 8 ménagé dans l'embase 2 et débouchant de sa face inférieure 2a.

Dans la forme d'exécution représentée, aux canaux extrêmes 7a et 7b, est associé un canal central 9 qui est également vertical et qui, comme eux, est cylindrique et a un diamètre sensiblement égal, au jeu fonctionnel près, au diamètre du fil métallique utilisé pour constituer les tiges 3.

Comme le montre plus en détails la figure 3 et suivant une caractéristique de l'invention, les deux faces latérales 8c en vis-à-vis du logement 8 et qui, dans la forme d'exécution représentée, sont tangentielles aux canaux 7a, 7b et 9, comportent des nervures verticales en saillie 12, également dénommées godrons. Ces nervures, dont la position longitudinale entre les canaux est décalée d'une face à l'autre, ont une très faible hauteur. Par exemple, pour des tiges réalisées avec un fil métallique ayant un diamètre compris entre 1,2 et 1,4 millimètre, la hauteur H de ses saillies est de l'ordre de 0,12 à 0,17 millimètre et par exemple de 0,15 millimètre pour un fil de 1,4 millimètre.

Suivant une autre caractéristique de l'invention, les tiges ne sont pas reliées directement à l'âme 10, mais par l'intermédiaire de tronçons 11 qui sont perpendiculaires à l'âme 10 et qui forment donc, avec celle-ci, un U régulier. Ces tronçons 11 ont une hauteur qui est au moins égale à la hauteur de l'embase 2 et plus particulièrement de son bossage 4, afin que lorsque, l'âme 10 et les tronçons 11 sont mis en place dans l'embase, comme montré figure 2, il soit possible de modifier l'inclinaison des tiges sans affecter la liaison de la structure en U avec l'embase 2.

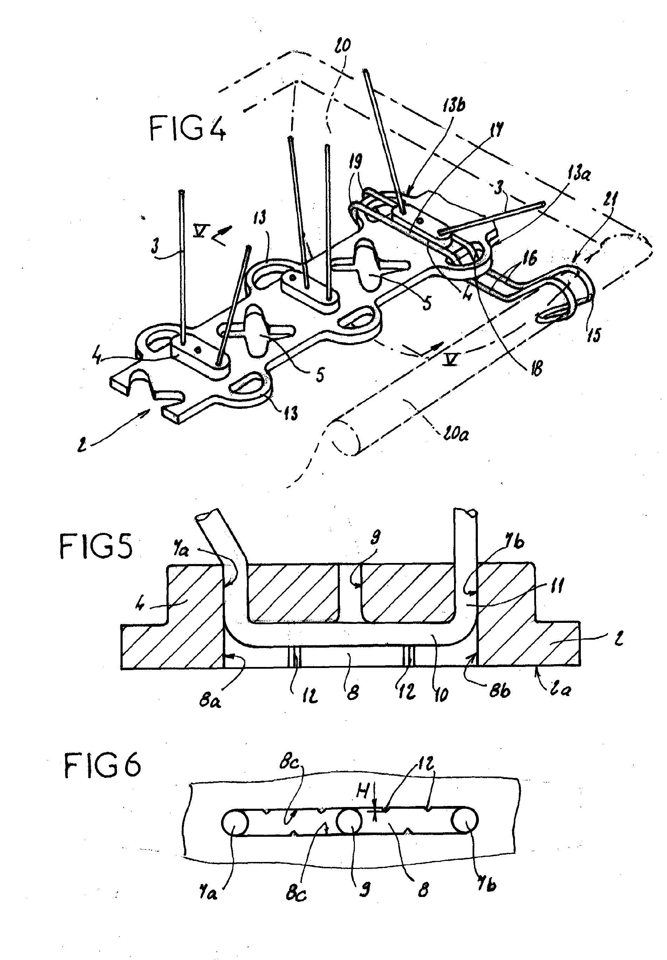

La figure 6 montre bien que, dans cette position, l'âme 10 est maintenue par serrage et plus précisément par pincement sur elle des nervures 12 saillant des faces latérales et verticales 8c du logement 8.

La série de structures en U mises à disposition de l'opérateur peut aussi comporter des modèles avec des évasements de tiges 3 ayant des angulations différentes, pour adapter le dispositif à la taille des volatiles.

Avec ce jeu de structures en U et avec la même embase 2, il est possible de satisfaire à tous les besoins se rencontrant, à savoir réaliser un dispositif posé sur un support large et destiné à repousser les pigeons, par exemple en utilisant les fourches des figures 9 ou 10, réaliser un dispositif anti pigeons pour un support étroit en utilisant les structures des figures 7 et 8, mais aussi réaliser un dispositif anti passereaux en utilisant les structures des figures, respectivement, 6 et 4 selon que le support est large ou étroit.

Si besoin est, l'opérateur peut encore tordre manuellement les parties des tiges 3 hors de l'embase, par exemple pour échapper à une saillie de paroi en conservant l'effet de repoussement, sans que cela affecte la liaison de la fourche avec l'embase.

Il ressort de ce qui précède que, grâce à la liaison mécanique effectuée par coincement de l'âme et interposition de tronçons perpendiculaires à l'âme, rendant indépendant la fixation de l'angulation des tiges, il est possible avec la même embase et des paires de structures en U, choisies parmi différents modèles, de satisfaire à toutes les conditions de pose et à toutes les contraintes de repoussement se rencontrant sur le marché.

La figure 5 montre que l'embase 2 comporte, en saillie de ses bords longitudinaux, des oreilles 13, espacées avec un pas régulier et dont l'ouverture 14 facilite la liaison par collage sur un support, mais surtout permet le passage d'un organe de fixation sur le bord extérieur d'un chéneau.

Dans la forme d'exécution représentée à cette figure l'organe est constitué par une épingle 21 en fil métallique comprenant deux branches parallèles conformées dans leur longueur, par pliage, pour présenter une boucle extrême 15, ouverte vers le bas, une partie rectiligne 16 reliée à une autre partie rectiligne 17 par une zone coudée et contre coudée 18. La partie rectiligne 17 est munie à son extrémité libre de deux crochets 19 ouverts vers le bas et terminant les branches de l'épingle.

Cette épingle 21 est mise en place en engageant son extrémité avec les crochets 19 dans l'une des oreilles 13, celle 13a à la figure 5, cet engagement étant effectué par-dessous et jusqu'à ce que la zone coudée et contre coudée 18 soit dans l'oreille 13a. A partir de cette position l'épingle est basculée sur l'embase, afin que sa partie rectiligne 17 vienne sur la face supérieure de celle-ci, puis les crochets 19, en appui sur l'oreille 13b, sont écartés de part et d'autre de cette oreille, jusqu'à ce qu'ils viennent dans son plan. A partir de là, ils sont rapprochés et accrochés sur elle, comme représenté.

Lorsque une longueur d'embase est équipée de plusieurs épingles 21, mises en place toutes les 6 ou 8 oreilles, la fixation du dispositif sur l'ourlet 20a d'un chéneau 20 s'effectue simplement en crochetant la boucle extrême 15 sur l'ourlet, comme montré figure 1 où le chéneau est représenté en traits mixtes.

Cette fixation présente l'avantage de ne pas gêner la collecte des eaux ruisselant sur la toiture tout en permettant d'utiliser le dispositif pour former un obstacle pour les volatiles et, en particulier les pigeons, qui auraient tendance à nidifier dans le chéneau.

## Revendications

1. Dispositif anti volatile composé d'une embase (2) allongée en matière plastique, apte à reposer sur un support, et des tiges métalliques (3) saillant vers le haut, **caractérisé en ce que** au moins l'une des tiges (3) est parcourue par un courant électrique.

2. Dispositif anti volatile selon la revendication 1, **caractérisé en ce qu'**il comprend des tiges (3) constituées par un fil métallique plié formant une structure en forme générale de U et au moins un conducteur parcouru par un courant électrique venant en appui contre chacune des tiges (3).

3. Dispositif anti volatile selon la revendication 1 ou la revendication 2, **caractérisé en ce que** les structures en forme de U présentent une tige (3) inclinée et une tige (3) droite et sont placées sur l'embase (2) de sorte que deux tiges inclinées consécutives sont orientées de manière opposée, et deux conducteurs (30) sont disposés de part et d'autre des structures en U et viennent en appui contre les tiges (3).

4. Dispositif anti volatile selon la revendication 1 ou la revendication 2, **caractérisé en ce que** deux structures en U consécutives présentent des tiges (3) ayant chacune un angle d'évasement différent, un conducteur étant en appui contre les tiges (3) présentant le plus grand évasement et un autre conducteur, étant en appui contre les tiges (3) présentant le plus faible évasement.

5. Dispositif anti volatile selon l'une des revendications 1 à 4, **caractérisé en ce que** chaque conducteur (30) est supporté par un berceau.

6. Dispositif anti volatile selon la revendication 5, **caractérisé en ce que** le berceau présente une traverse (22) pouvant s'encliqueter dans l'embase (2) et deux montants (25) présentant des encoches dans lesquelles les conducteurs sont engagés.

7. Dispositif anti volatile selon la revendication 6, **caractérisé en ce que** chaque montant (25) présente au moins deux encoches (21) ménagées à des hauteurs différentes par rapport à la base.

8. Dispositif anti volatile selon l'une des revendications 2 à 7, **caractérisé en ce qu'**il comprend au moins deux embases (2) disposées bout à bout, les conducteurs (30) étant reliés les uns aux autres par un élément conducteur souple tel qu'un câble métallique ou une tresse métallique (26) sertie à chaque extrémité sur les conducteurs (30).

9. Dispositif anti volatile selon l'une des revendications 1 à 8 **caractérisé en ce que** les structures en U traversent des canaux verticaux (7, 9) de l'embase (2), alors que leur âme (10) est contenue dans un logement (8) de l'embase (2) débouchant de la face inférieure de celle-ci, et communiquant avec lesdits canaux, chacun des logements (8) ménagé dans l'embase (2) pour contenir l'âme (10) d'une structure en U, d'une part, présente une forme oblongue dont chacune des deux extrémités communique avec un canal vertical cylindrique (7a, 7b) ayant un diamètre égal, au jeu près, au diamètre d'une tige (3) et, d'autre part, comporte, en saillie de ses faces latérales opposées (8c), des godrons ou des nervures verticales (12) aptes à venir en appui de pincement contre l'âme (10) reliant deux tiges (3), tandis que chacune des tiges (3) est reliée à son âme (10) par un tronçon (11), perpendiculaire à cette âme et s'étendant au moins sur une hauteur égale à l'épaisseur de l'embase (2).

10. Dispositif anti volatile selon la revendication 9, **caractérisé en ce que** chaque logement (8) de l'embase comporte un canal supplémentaire (9), vertical et central, et chaque structure en U est choisie parmi plusieurs modèles se différenciant par l'orientation des parties libres des tiges (3), inclinées ou droites, et par la longueur de l'âme (10), qui peut être courte, pour coopérer avec un canal extrême (7a, 7b) et avec le canal central (9), ou longue pour coopérer avec les deux canaux extrêmes (7a, 7b).

11. Dispositif anti volatile selon la revendication 9, **caractérisé en ce que** l'embase (2) comporte en saillie de ses bords longitudinaux des oreilles ajourées (13) coopérant avec un organe d'accrochage sur le bord extérieur d'un chéneau.

12. Dispositif anti volatile selon la revendication 11 **caractérisé en ce que** l'organe d'accrochage est constitué par une épingle à deux branches (14), en fil métallique, conformée par pliage dans sa longueur pour présenter une boucle extrême (15) d'accrochage sur l'ourlet d'un chéneau (20), deux parties rectilignes (16 et 17) reliées par une partie coudée et contre coudée (18) passant à travers l'une (13a) des oreilles de l'embase (2), et, à l'extrémité de la partie rectiligne (17) deux crochets (19) s'accrochant sur l'oreille (13b), opposée à la précédente.
